# EUROPÄISCHE PATENTSCHRIFT

(11) **EP 3 534 142 B1**
(45) Veröffentlichungstag und Bekanntmachung des Hinweises auf die Patenterteilung: **09.02.2022**
(21) Anmeldenummer: 19156352.7
(22) Anmeldetag: 11.02.2019
(51) Int. Cl.: G01N 11/00, G01N 3/32, G01N 11/14, F16C 32/04

(54) **RHEOMETER**
RHEOMETER
RHÉOMÈTRE

(30) Priorität: 01.03.2018 AT 501742018
(43) Veröffentlichungstag der Anmeldung: 04.09.2019
(73) Patentinhaber: Anton Paar GmbH, 8054 Graz-Straßgang (AT)
(72) Erfinder: ROMIRER, Richard, 8054 Graz (AT); KOTZIAN, Heimo, 8020 Graz (AT); KRAKER, Martin, 8052 Graz (AT)
(74) Vertreter: Wildhack & Jellinek

(56) Entgegenhaltungen:
- JP-A- H04 258 525
- JP-A- 2001 324 436
- US-A- 5 506 459
- US-B1- 6 213 737
- US-B2- 9 574 983
- ZHOU SHENG-QI ET AL: "Effects of shear rate and temperature on viscosity of alumina polyalphaolefins nanofluids", JOURNAL OF APPLIED PHYSICS, AMERICAN INSTITUTE OF PHYSICS, US, Bd. 107, Nr. 5, 15. März 2010 (2010-03-15) , Seiten 54317-54317, XP012133625, ISSN: 0021-8979, DOI: 10.1063/1.3309478

## Beschreibung

Die vorliegende Erfindung betrifft ein Rheometer gemäß dem Oberbegriff des Patentanspruchs 1.

Aus dem Stand der Technik sind unterschiedliche Rheometer bekannt, die AT 515 219 A1 zeigt beispielsweise eine Kombination von Dreh-Rheometer (rotierender Messmotor inkl. Drehmomentbestimmung und ggf. Normalkraftbestimmung) und Linearmotor (linearer Messmotor), der den unteren Messteil in Richtung der Rotationsachse des Rheometers höhenverschiebt und den Verschubweg vorgibt bzw. misst. Beide Messmotoren enthalten eine Kraftmessung bzw. bestimmen die Kräfte aus der jeweiligen Bewegung und der Stromaufnahme des Motors.

Rheometer sind Instrumente zur Bestimmung des Fließverhaltens, insbesondere von viskoelastischen Proben. Bekannte Verfahren zur Bestimmung des Fließverhaltens sind beispielsweise Rotations-, Kriech-, Relaxions- und Oszillationsversuche. Im Regelfall werden hier fluide Proben untersucht.

Mittels derartiger Dreh-Rheometer werden auch Festkörper untersucht, z.B: in Oszillationsversuchen. Solche Untersuchungen werden dynamisch-mechanische Analysen genannt.

Die dynamisch-mechanische Analyse (DMA) wird hauptsächlich zur Bestimmung der viskoelastischen Eigenschaften von Kunststoffen und anderen Werkstoffen herangezogen. Durch Aufbringung unterschiedlicher Spannungszustände können Werkstoffeigenschaften wie Speichermodul und Verlustmodul (komplexer Modul) in Abhängigkeit der Temperatur, Frequenz und weiteren Abhängigkeitsgrößen bestimmt werden.

Bei der dynamisch-mechanischen Analyse (DMA), oder auch dynamisch-mechanische Thermoanalyse (DMTA) genannt, werden geringe sinusförmige, mechanische Beanspruchungen auf einem Prüfkörper aufgebracht. Bei rein elastischem Verhalten einer Probe tritt keine zeitliche Phasenverschiebung zwischen Krafteinwirkung und Antwortsignal auf. Bei rein viskosem Verhalten, wie es bei sogenannten Newtonschen-Flüssigkeiten auftritt, kann eine Phasenverschiebung von exakt 90° festgestellt werden. Bei viskoelastischen Proben, wie Kunststoffen, können eine Phasenverschiebung und somit elastische aber auch viskose Eigenschaften gemessen werden.

Anhand der dynamisch-mechanischen Analyse kann ein sehr breites Feld an unterschiedlichen Werkstoffen mit unterschiedlichen Eigenschaften untersucht werden. Um ein möglichst großes Feld an Eigenschaften abzudecken, werden unterschiedlichste Beanspruchungsarten wie Zug, Druck, Biegung oder Torsion eingesetzt. Somit können Messaufbauten für Werkstoffe mit niedrigen Modulwerten, wie sie bei Elastomeren auftreten, und hohen Modulwerten, wie sie bei Verbundwerkstoffen auftreten, mit den limitierenden Kraft- und Wegbereichen der Messgeräte realisiert werden.

Werkstoffproben mit kleinen Querschnitten werden typischerweise in Zugbeanspruchung gemessen, um eine ausreichende Kraftauflösung zu erreichen. Aufgrund der hohen Empfindlichkeit und Genauigkeit der DMTA-Messung in Torsion werden Thermoplaste bevorzugt in diesem Modus gemessen. Wegen der anisotropen Eigenschaften von Verbundwerkstoffen werden diese fast ausschließlich im Biegemodus analysiert. Werkstoffe mit niedrigen Modulwerten, wie bei Elastomeren, werden typischerweise in Druck oder Scherung gemessen.

Eine Kombination von linearem Messmotor und Rotationsmotor, wie in der AT 515 219 A1 beschrieben, ermöglicht eine Vielzahl von unterschiedlichen Parametern, insbesondere gleichzeitig oder zeitnah hintereinander, an ein und derselben Probe zu messen.

Die dabei verwendete lineare DM(T)A-Analyseeinheit ist ein Linearmotor mit integrierter Kraftmessung. Aufgrund der bewegten Teile des Linearmotors unterscheidet man zwei Konstruktionsarten. Bei feststehendem Spulenpaket wird von einem Moving-Magnet-Linearmotor, bei feststehenden Magneten von einem Moving-Coil-Linearmotor gesprochen. Der Moving-Magnet-Linearmotor hat den Vorteil, dass die Strom-Zufuhrleitungen für den Motor und das Messsystem nicht bewegt werden müssen. Bei einem Moving-Coil-Motor muss zwangsläufig die Strom-Zufuhrleitung mitgeführt werden, was zu Wartungsaufwänden führt und die Messqualität negativ beeinflussen kann.

Bei der Verwendung von Moving-Magnet-Motoren als Linearmotoren wird das Prinzip des Tauchspulenmotors umgekehrt, ein Magnet wird in der stillstehenden Spule bewegt und damit der Linearvorschub ermöglicht. Dies hat einerseits den Vorteil, dass keine elektrischen Zuleitungen zur Stromversorgung mitbewegt werden müssen, welche Aufgrund der auftretenden Gravitations- und Reibungskräfte der Zuleitung die empfindliche Kraftmessung negativ beeinflussen können, was beim Moving-Coil-Motor zur Kontaktierung der Spule unumgänglich ist, gleichzeitig wird bei einem Moving-Magnet-Motor aber auch das Gewicht der bewegten Teile durch den Magnet ansteigen, was sich negativ auf die Messqualität auswirken kann, da ein höherer Spulenstrom und somit ein höheres Signalrauschen nötig ist um die Gravitationskraft des Läufers inkl. Magnet zu überwinden.

Wird die Spule bestromt entsteht ein elektromagnetisches Feld, welches eine Kraft auf den Läufer ausübt. Die entstehenden Kräfte sind dabei proportional zum elektrischen Strom (F ~ I). Um eine Auslenkung des Läufers in z-Richtung (entgegen der Schwerkraft) zu erreichen muss zuerst die Gravitationskraft FG des Läufers überwunden werden. Möchte ein Anwender eine Probe mit einer Kraft FP belasten, die deutlich kleiner als die Gravitationskraft des Motors ist (FP << FG), so ist auch der für die Kraft auf die Probe benötigte Strom deutlich kleiner als der für die Überwindung der Gewichtskraft des Läufers benötigte Strom (IMessung = IG + IP ≈ IG). Kraftmessungen, die auf der Messung des Stroms durch die Spule basieren, haben daher ein unteres Limit, wenn IP so klein ist, dass es im Rauschband von IG liegt.

Weiters sind aus dem Stand der Technik Linearantriebe mit einer federnden Aufhängung der Welle bzw. des Läufers bekannt. Durch die fixen Federlager sind nur kleine Auslenkungen möglich, da bei größeren Auslenkungen Federn nichtlineares Verhalten, Hystereseeffekte oder Einflüsse beim Überschreiten des Kipppunkts der Feder zeigen, was zu weiteren Messungenauigkeiten führt.

Aufgabe der vorliegenden Erfindung ist es daher ein Rheometer bereitzustellen, dass die Kraftmessung durch Messung des Spulenstroms ermöglicht und eine höhere Genauigkeit und geringere Fehler in der Kraftmessung der auf die Probe aufgebrachten Kraft ermöglicht.

Diese Aufgabe wird durch die kennzeichnenden Merkmale des Anspruchs 1 gelöst. Dabei ist vorgesehen, dass die DM(T)A-Analyseeinheit einen, insbesondere magnetisch wirkenden, Linearmotor mit einem Stator und einem Läufer aufweist, wobei die DM(T)A-Analyseeinheit eine magnetisch wirkende Gravitationskompensationseinheit aufweist, mit der die Gewichtskraft der Stellstange, des an der Stellstange angeordneten Messteils, des Läufers und gegebenenfalls der an dem Läufer befestigten Komponenten kompensierbar ist.

Durch die Anordnung der Gravitationskompensationseinheit wird eine separate Kompensation der Gravitationskraft erreicht und so die Messqualität durch die Entlastung der Gewichtskomponente des bewegten Läufers inkl. Magneten signifikant verbessert. Der maßgebliche Vorteil der Gravitationskompensationseinheit ist, dass Proben mit sehr kleinen Kräften und/oder hoher Messauflösung untersucht werden können, ohne dass die Schwerkraft die Messung merklich negativ beeinträchtigt, da die Schwerkraft und die Kompensationskraft sich gegenseitig aufheben und nur noch die Kraft auf die Probe gemessen wird.

Besonders vorteilhafte Ausführungsformen des Rheometers werden durch die Merkmale der abhängigen Ansprüche näher definiert:
Eine vorteilhafte Ausbildung des erfindungsgemäßen Rheometers wird bereitgestellt, wenn die Gravitationskompensationseinheit zumindest einen Permanentmagneten und ein ferromagnetisches Teil aufweist,
- dass der Permanentmagnet an der Stellstange und/oder dem Läufer des Linearmotors und das ferromagnetische Teil an der Basis des Rheometers angeordnet sind oder
- dass das ferromagnetische Teil an der Stellstange und/oder dem Läufer des Linearmotors und der Permanentmagnet an der Basis des Rheometers angeordnet sind, und
- dass das ferromagnetischen Teil und der Permanentmagnet derart zueinander abgestimmt sind, dass zwischen dem ferromagnetischen Teil und dem Permanentmagnet eine Kompensationskraft entgegen der Schwerkraftrichtung auf den Läufer oder die Stellstange wirkt, die der Gewichtskraft der Stellstange, des an der Stellstange angeordneten Messteils und des Läufers entgegenwirkt.

Um den Magnetfluss vorteilhaft auszubilden und die Geometrie und Größe des Permanentmagneten und des ferromagnetischen Teils optimal aufeinander abzustimmen kann vorgesehen sein, dass das ferromagnetische Teil als Rohr oder ringförmig ausgebildet ist und der Permanentmagnet zylindrisch ausgebildet ist, wobei der Permanentmagnet an dem Läufer, insbesondere um den Läufer herum, innerhalb des als Rohr ausgebildeten ferromagnetischen Teils angeordnet ist oder dass das ferromagnetische Teil zylindrisch ausgebildet und an dem Läufer, insbesondere um den Läufer herum angeordnet ist, wobei der Permanentmagnet als Rohr ausgebildet ist und als Stator fungiert, wobei das ferromagnetische Teil innerhalb des als Rohr ausgebildeten Permanentmagneten angeordnet ist.

Vorteilhafte Materialien für das ferromagnetische Teil sind Eisen oder Legierungen aus Eisen-Nickel mit geringer magnetischer Hysterese.

Um eine besonders kompakte und leichte Ausführungsform bereitzustellen, kann vorgesehen sein, dass die Gravitationskompensationseinheit in den Linearmotor integriert ist, und/oder dass der Linearmotor als Moving-Magnet-Motor ausgebildet ist, dass der Permanentmagnet als Magnet des Linearmotors ausgebildet ist und dass das ferromagnetische Teil in den Stator des Linearmotors integriert ist.

Um das Magnetfeld des Permanentmagneten vorteilhaft zu bündeln und innerhalb der Gravitationskompensationseinheit zu halten, kann vorgesehen sein, dass der Permanentmagnet durch ferromagnetische Elemente jeweils an den Enden des Permanentmagnetes entlang der Bewegungsrichtung des Linearmotors abgedeckt ist und einen magnetischen Rückschluss ausbildet.

Ein geeigneter magnetischer Rückschluss wird durch den Abschluss des Permanentmagneten in z-Richtung, also oben und unten entlang der Achse A-A, erzielt. Die Feldlinien vom Permanentmagneten bilden so innerhalb der Anordnung einen geschlossenen Kreis und breiten sich nur minimal über den Wirkort hinaus aus. Damit erreicht man einen optimalen Wirkungsgrad der Anordnung und verhindert, dass austretende Feldkomponenten die Messung stören. Das magnetische Feld ist also hauptsächlich/nur am Ort der Kraftübertragung zwischen Permanentmagneten und ferromagnetischen Teil innerhalb der Gravitationskompensationseinheit aktiv.

Vorteilhaft kann vorgesehen sein, dass der Permanentmagnet in einer Ausgangsposition im Zentrum des ferromagnetischen Teils angeordnet ist, sodass ein minimaler magnetischer Widerstand in Richtung der Bewegungsrichtung des Linearmotors in der Ausgangsposition wirkt. Die Energie des Magnetfelds im Stator erreicht ein Minimum, wenn der Magnet in etwa im Zentrum des ferromagnetischen Stators sitzt, da der magnetische Widerstand hier minimal ist. Der Magnet erfährt daher eine Reluktanzkraft (FR) zum Zentrum des Stators, sodass er möglichst gleichmäßig mit ferromagnetischem Material umgeben ist. Dies bewirkt eine Zentrierung des Magneten innerhalb des Stators. Wird der Magnet, beispielsweise durch einen Spulenstrom, ausgelenkt, erfährt dieser eine rücktreibende Reluktanzkraft ins Zentrum des Stators.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

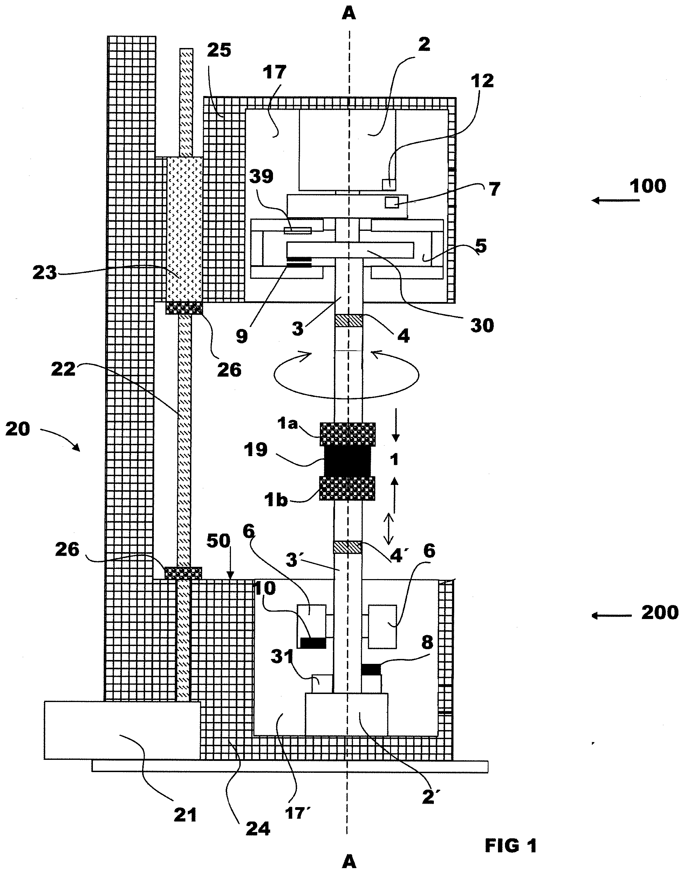

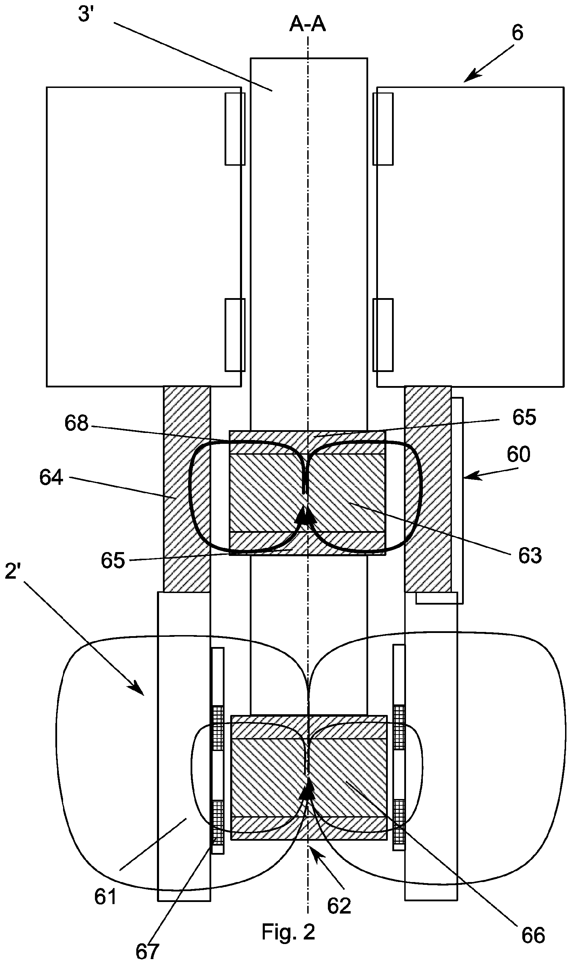

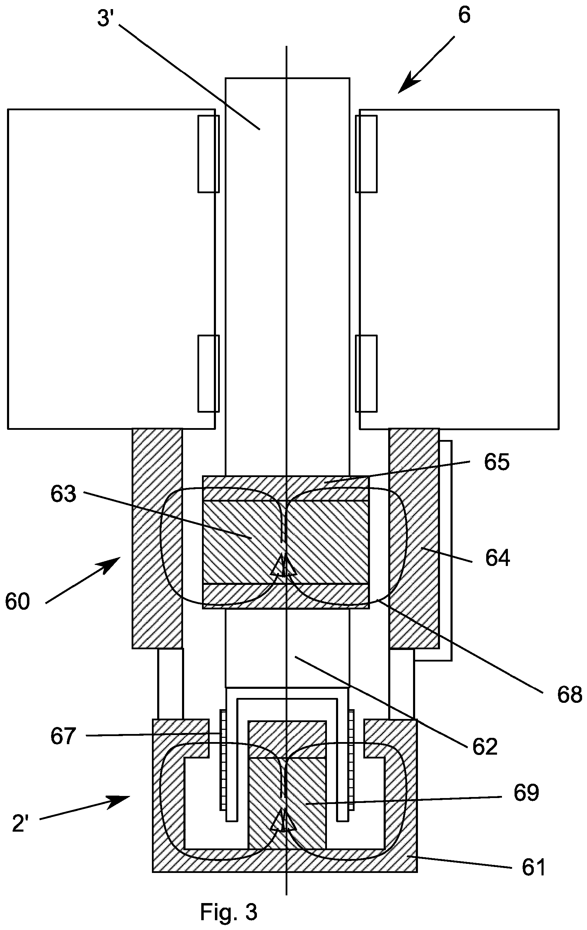

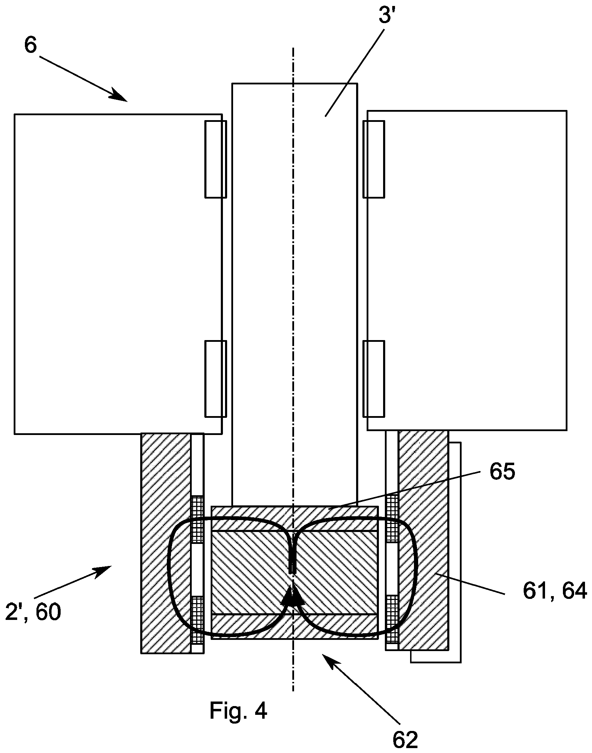

In der Fig. 1 ist ein erfindungsgemäßes Rheometer schematisch dargestellt. Fig. 2 zeigt eine erfindungsgemäße schematische Ansicht einer Ausführungsform mit Gravitationskompensationseinheit und Moving-Magnet-Motor. In Fig. 3 ist eine Ausführungsform mit einem Moving-Coil-Motor und Gravitationskompensationseinheit dargestellt. Fig. 4 zeigt eine Ausführungsform mit in den Linearmotor integrierter Gravitationskompensationseinheit.

Das in Fig. 1 dargestellte Rheometer umfasst zwei, vorzugsweise modulartig aufgebaute und damit austauschbare, auf einem Stativ 20 mit einem Gestell 24 und einem Träger 25 gelagerte Einheiten, von denen die obere Einheit ein Rotationsrheometer 100 und die untere Einheit eine lineare DM(T)A-Analyseeinheit 200 aufweist. Alternativ ist es auch möglich, die lineare DM(T)A-Analyseeinheit 200 oben und das Rotationsrheometer 100 gestellnah anzuordnen.

Das Rotationsrheometer 100 umfasst einen Träger 25 mit einem Messmotorraum 17, in dem ein Mess- bzw. Antriebsmotor 2 angeordnet ist, der eine in einem Rotationsluftlager 5 gelagerte Messwelle 3 antreibt. Das Rotationsluftlager 5 trägt und zentriert die Messwelle 3 bzw. eine mit dieser verbundene Lagerplatte 30. Alternative Lagerungsmöglichkeiten, z.B. Magnetlager, sind ebenfalls einsetzbar. Ein Messteil 1a ist über eine Kupplung 4 mit der Messwelle 3 verbindbar.

Der Träger 25 ist über einen Stellteil 23 auf einer Schraubspindel 22 höhenverstellbar gelagert. Die Schraubspindel 22 wird von einem Stellmotor 21 angetrieben und die Höhe des Trägers 25 bezogen auf eine am Gestell 24 vorgegebene Basis 50 und/oder der Verstellweg des Trägers 25 können mittels einer Wegmesseinheit 26 vermessen werden.

Prinzipiell ist jede beliebige pneumatische, hydraulische, piezoelektrische oder elektromechanische Höhenverstellung des Trägers 25 möglich und die Höhenlage des Trägers 25 kann optisch, mechanisch oder elektrisch ermittelt werden. Der Messmotor 2 ist dazu ausgebildet, Drehmomente und Normalkräfte, die auf die Probe bei vorgegebener Belastung wirken, zu bestimmen.

Das Rotationsrheometer 100 besitzt vorteilhafterweise an der Messwelle 3 und/oder an der Lagerplatte 30 und/oder im Lager 5 eine Normalkraftmesseinheit 9, mit der auf die Messwelle 3 in Richtung der Achse AA des Rheometers 100 ausgeübte Kräfte ermittelt werden können. Gleichzeitig kann diese Normalkraftmesseinheit 9 auch dazu ausgebildet sein, Kräfte in Richtung der Achse AA auf die Lagerplatte 30 und/oder die Messwelle 3 auszuüben. Alternativ oder zusätzlich zur Normalkraftmesseinheit 9 kann eine Höhenmesseinheit 39 als Sensor für die Höhenlage oder Höhenveränderung der Messwelle 3 und/oder der Lagerplatte 30 vorgesehen sein. Mit der Kraftmesseinheit 9 und/oder mit der Höhenmesseinheit 39 können vorhandene Verstelleinheiten angesteuert und mit diesen den auf die Messwelle 3 in Richtung der Achse AA ausgeübten Kräften entgegengewirkt und die Höhenlage des Messteils 1a invariant gehalten werden. Derartige Verstelleinheiten können mechanisch, pneumatisch, hydraulisch, elektrisch, piezoelektrisch oder elektromechanisch funktionieren. Eine derartige Verstelleinheit kann z.B. in die Normalkraftmesseinheit 9 integriert sein oder liegt in Form des die Schraubspindel 22 antreibenden Stellmotors 21 vor, der Stellsignale von der Höhenmesseinheit 39 erhält.

Der Antriebs- bzw. Messmotor 2 besitzt einen Momentendetektor 12, mit dem das von ihm oder auf ihn ausgeübte Drehmoment ermittelt werden kann. Alternativ kann das Drehmoment auch aus der Stromaufnahme des Messmotors 2 ermittelt werden. Des Weiteren ist für die Messwelle 3 ein Winkel-Encoder 7 vorgesehen, mit dem der Drehwinkel der Messwelle 3 ermittelt werden kann oder eine Verdrehung der Messwelle 3 festgestellt werden kann. Drehmoment und/oder Drehwinkel und/oder auftretende Normalkraft sind die wesentlichen festzustellenden Messwerte beim Rotationsrheometer 100.

Ein dem Messteil 1a gegenüberliegender Messteil 1b wird von einer linear verfahrbaren Stellstange 3' der dem Rotationsrheometer 100 gegenüberliegend angeordneten linearen DM(T)A-Analyseeinheit 200 getragen. Die Messteile 1a und 1b begrenzen den Spalt 1, in dem die zu untersuchende Probe 19 angeordnet wird. Über eine Kupplung 4' ist der Messteil 1b austauschbar mit dem Linearmotor 2' verbindbar. Der Linearmotor 2' verstellt die in einem Luftlager 6 gelagerte Stellstange 3' in Richtung der Rheometerachse AA. Zur Messung des Verstellwegs ist der Stellstange 3' ein Weg-Encoder 8 zugeordnet. Die Messung der von der Stellestange 3' ausgeübten Druck- oder Zugkräfte kann mit der Normalkraftmesseinheit 9 des Rheometermotors 100 oder eigenen Kraftmesseinheiten in der DM(T)A-Analyseeinheit 200 erfolgen. Bevorzugt ist der Linear- bzw. Verstellmotor 2' als Messmotor ausgeführt und aus der Stromaufnahme des Linearmotors 2' ist die Zug- bzw. Druckkraft, die auf die Probe 19 wirkt, ermittelbar. Für die Ermittlung einer allfälligen Rotation der Stellstange 3' um die Achse AA kann ein Winkel-Encoder 10 vorgesehen sein, der eine Dreheinheit 31 zur Rotation der Stellstange 3' ansteuert. Alternativ kann durch geeignet platzierte zusätzliche Lager, beispielsweise Luftlager, welche auf einen durch die Stellstange 3' verlaufenden Querbalken wirken, oder durch eine geeignete Geometrie der Stellstange 3' innerhalb des Lagers, insbesondere ein quadratischer Querschnitt der Stellstange 3', eine Drehung der Stellstange 3' um die Rheometerachse AA verhindert werden.

Das Rheometer weist eine in der Fig. 1 nicht dargestellte Gravitationskompensationseinheit 60 auf, mit der die Gewichtskraft der Stellstange 3', des an der Stellstange 3' angeordneten Messteils 1b und des Läufers 62 des Linearmotors 2' kompensierbar ist.

In Fig. 2 ist eine schematische Detailansicht einer Ausführungsform der DM(T)A-Analyseeinheit 200 dargestellt. Die DM(T)A-Analyseeinheit 200 weist einen magnetischwirkenden Linearmotor 2' auf, der Linearmotor 2' ist als Moving-Magnet-Motor ausgebildet, der einen Stator 61 und einem Läufer 62 aufweist. Der Läufer 62 bezeichnet die Summe der in Richtung der Achse A-A des Rheometers bewegten Teile innerhalb der DM(T)A Analyseeinheit 200, insbesondere die Stellstange 3' und die magnetischen Einheiten. Auf dem Stator 61 ist die Spule 67 des Linearmotors 2' angeordnet die bei Bestromung einen an dem Läufer 62 befestigten Magnet 66 in Richtung der Achse A-A des Rheometers bzw. der Stellstange 3' verstellt. Zwischen dem Linearmotor 2' und dem Luftlager 6 ist eine magnetisch wirkende Gravitationskompensationseinheit 60 angeordnet. Die Gravitationskompensationseinheit 60 umfasst einen an dem Läufer 62 bzw. der Stellstange 3' angeordneten Permanentmagneten 63, der zylindrisch ausgebildet ist und um die Stellstange 3' bzw. den Läufer 62 herum angeordnet ist. Die Gravitationskompensationseinheit 60 umfasst weiters ein ferromagnetisches Teil 64 das rohrförmig ausgebildet ist und über den Stator 61 des Linearmotors 2' mit der Basis 50 des Rheometers verbunden ist. Die Stellstange 3' bzw. der Läufer 62 sind durch das rohrförmige ferromagnetische Teil 64 hindurchgeführt und der Permanentmagnet 63 in Bezug auf die Achse A-A in einer Ausgangsposition in dessen Mitte angeordnet. Das ferromagnetischen Teil 64 und der Permanentmagnet 63 sind aufeinander abgestimmt, sodass zwischen dem ferromagnetischen Teil 64 und dem Permanentmagnet 63 eine Kompensationskraft in Richtung der Achse A-A entgegen der Schwerkraftrichtung auf den Läufer 62 bzw. die Stellstange 3' wirkt. Die Kompensationskraft wirkt der Gewichtskraft der Stellstange 3', des an der Stellstange 3' angeordneten Messteils 1b und des Läufers 62, sowie des Magneten 63, des Magneten 66, der ferromagnetischen Elemente 65 und der Kupplung 4' entgegenwirkt. Der Permanentmagnet 63 hält mit dem ferromagnetischen Teil 64 die gesamte Anordnung, also Stellstange 3', Läufer 62 und Messteil 1b, fest, während die Spule 67 des Linearmotors 2' durch die Modifikation des Magnetfeldes die Auslenkung der Stellstange 3' bzw. des Läufers 62 durchführt. Damit sind nur kleine Spulenströme nötig um eine Kraft auf eine Probe 19 einwirken zu lassen. Die Energie des Magnetfelds 68 der Gravitationskompensationseinheit 60 erreicht ein Minimum, wenn der Permanentmagnet 63 in etwa im Zentrum des ferromagnetischen Teils 64 sitzt, da der magnetische Widerstand hier minimal ist. Der Permanentmagnet 63 erfährt daher eine Reluktanzkraft (FR) zum Zentrum ferromagnetischen Teils 64, sodass er möglichst gleichmäßig mit ferromagnetischem Material umgeben ist. Dies bewirkt eine Zentrierung des Permanentmagneten 63 innerhalb des ferromagnetischen Teils 64. Wird der Permanentmagnet 63, beispielsweise durch einen Spulenstrom, ausgelenkt, erfährt dieser eine rücktreibende Reluktanzkraft ins Zentrum des ferromagnetischen Teils 64. Die Stärke dieser Reluktanzkraft ist geometrie- und positionsabhängig. Es ist nun möglich, die Geometrie des ferromagnetischen Teils 64 und des Permanentmagneten so zu wählen, dass die Reluktanzkraft die gleiche Größe wie die Gravitationskraft des Läufers 62 inkl. Magnet, der Stellstange 3' und des Messteils 1b und gegebenenfalls der Kupplung hat, jedoch mit umgekehrtem Vorzeichen. Dies bewirkt, dass sich Reluktanzkraft und Gewichtskraft gegenseitig aufheben und der Läufer 62 somit in Schwebe ist. Bei geeigneter Geometrie besitzt das System ein stabiles Gleichgewicht und der Läufer 62 kehrt nach einer Auslenkung selbständig zur Schwebeposition zurück, dies geschieht aufgrund der ortsabhängigen rücktreibenden Reluktanzkraft. Der Läufer positioniert sich in z-Richtung, also in Richtung der Achse A-A, damit selbständig ohne Anlegen eines Spulenstroms. Je nach Geometrie und Materialien und deren Abstimmung aufeinander kann eine schwache oder starke Positionierung des Läufers 62 ausgeprägt werden. Auch labile Gleichgewichte des Systems, in welchen es eine Schwebeposition gibt, aber der Läufer nicht selbstständig wieder an seine ursprüngliche Position zurückkehrt, eigenen sich für präzise Messungen, da in der näheren Umgebung der Schwebeposition nur sehr niedrige Ströme gebraucht werden um den Läufer in Position zu halten. Der Vorteil der Gravitationskompensationseinheit 60 ist, dass Proben 19 mit sehr kleinen Kräften untersucht werden können, ohne dass die Schwerkraft die Messung beeinflusst.

In Fig. 3 ist eine weitere Ausführungsform des erfindungsgemäßen Rheometers in Detailansicht dargestellt. Der Linearmotor 2' ist als Moving-Coil-Motor bzw. als Tauchspulenmotor ausgebildet. Die Gravitationskompensationseinheit 60 ist zwischen dem Linearmotor 2' und dem Lager 6 angeordnet. Die Gravitationskompensationseinheit 60 ist dabei gleich der in Fig. 2 ausgebildet. Die Gravitationskompensationseinheit 60 umfasst einen an dem Läufer 62 bzw. der Stellstange 3' angeordneten Permanentmagneten 63, der zylindrisch ausgebildet ist und um die Stellstange 3' bzw. den Läufer 62 herum angeordnet ist. Die Gravitationskompensationseinheit 60 umfasst weiters ein ferromagnetisches Teil 64 das rohrförmig ausgebildet ist und über den Stator 61 des Linearmotors 2' mit der Basis 50 des Rheometers verbunden ist. Die Stellstange 3' bzw. der Läufer 62 sind durch das rohrförmige ferromagnetische Teil 64 hindurchgeführt und der Permanentmagnet 63 in Bezug auf die Achse A-A in dessen Mitte angeordnet. Der Linearmotors 2' ist als Tauchspulenmotor ausgebildet und weist eine Spule 67, welche mit dem Läufer 62 verbunden ist, auf. Der Stator 61 des Tauchspulenmotors umfasst einen Motorpermanentmagneten 69, der beispielsweise zylindrisch im Zentrum des Stators 61 sitzt. In einer alternativen Ausführungsform kann der Motorpermanentmagnet 69 auch an anderer Position im Stator 61, beispielsweise ringförmig im äußeren Bereich des Stators 61, angebracht sein.

In Fig. 4 ist eine weitere Ausführungsform des erfindungsgemäßen Rheometers in einer schematischen Ansicht. Der Linearmotor 2' ist als Moving-Magnet-Motor ausgebildet. Bei dieser Ausführungsform ist die Gravitationskompensationseinheit 60 in den Linearmotor 2' integriert. Der Permanentmagnet 63 ist als Magnet des Linearmotors 2' ausgebildet bzw. in diesen integriert und am Läufer 62 angeordnet. Das ferromagnetische Teil 64 ist in den Stator 61 des Linearmotors 2' integriert bzw. ist der Stator 61 als ferromagnetisches Teil 64 ausgebildet. Durch die Integration der Gravitationskompensationseinheit 60 in den Linearmotor 2' ist eine besonders kompakte Bauweise erreichbar und ein zusätzliches Gewicht des ausgelagerten Permanentmagneten 64 entfällt und der Bauraum stark verkleinert werden kann.

Alternativ zu den Ausbildungen der Fig. 2 und 3, kann vorgehsehen sein, dass das ferromagnetische Teil 64 an der Stellstange 3' und/oder dem Läufer 62 des Linearmotors 2' und der Permanentmagnet 63 als Ringmagnet im Stator 61 oder an der Basis 50 des Rheometers angeordnet sind oder mit dieser verbunden ist.

Optional kann wie in den Fig. 2 bis 4 dargestellt der Permanentmagnet 63 durch ferromagnetische Elemente 65 jeweils an den Enden des Permanentmagnetes 63 entlang der Bewegungsrichtung des Linearmotors 2' bzw. des Läufers 62, also in Richtung der Achse A-a, abgedeckt sein und einen magnetischen Rückschluss ausbilden.

Das ferromagnetische Teil 64 und/oder die ferromagnetischen Elemente 65 sind bei erfindungsgemäßen Ausführungsformen vorteilhaft aus Eisen oder einer Legierung aus Eisen-Nickel mit geringer magnetischer Hysterese.

## Patentansprüche

1. Rheometer zur Ermittlung rheometrischer Messdaten, wobei das Rheometer ein Rotationsrheometer (100) und eine lineare dynamisch-mechanische Analyseeinheit (DMA) (200) oder eine lineare dynamisch-mechanische Thermoanalyseeinheit (DMTA) (200) umfasst, das zumindest Einheiten zur Messung und/oder Einstellung der Normalkraft (9) und/oder der Drehzahl des Messteils (1a) und/oder des von der Messwelle (3) oder auf die Messwelle (3) ausgeübten Drehmoments und/oder des Auslenkwinkels der Messwelle (3) aufweist, wobei das Rotationsrheometer (100) eine Messwelle (3) umfasst, wobei die Messwelle (3) in einem Lager (5), vorzugsweise in einem Luftlager, vorzugsweise in einer vorgegebenen Höhe über einer Basis (50) des Rotationsrheometers (100), rotierbar gelagert ist, wobei das Rotationsrheometer (100) mit der linearen DMA- oder DMTA--Analyseeinheit (200) kombiniert ist, die eine in einem Lager (6), vorzugsweise in einem Luftlager, vorzugsweise in einer vorgegebenen Drehlage, geführt linear verstellbare Stellstange (3') und zumindest Einheiten zur Messung der Zug- und/oder Druckkraft und/oder der Position und/oder Vorschubbewegung der Stellstange (3') besitzt, und wobei die Messwelle (3) und die Stellstange (3') jeweils einen Messteil (1a, 1b) tragen, die einen Messspalt (1) ausbilden und die zu untersuchende, vorzugsweise viskoelastische, Probe (19) in den Messspalt (1) zwischen den einander gegenüberliegenden Messteilen (1a, 1b) eingebracht wird, wobei die lineare DMA- oder DMTA--Analyseeinheit (200) einen, insbesondere magnetischwirkenden, Linearmotor (2') mit einem Stator (61) und einem Läufer (62) aufweist, **dadurch gekennzeichnet,**
**dass** die DMA- oder DMTA-Analyseeinheit (200) eine magnetisch wirkende Gravitationskompensationseinheit (60) aufweist, mit der die Gewichtskraft der Stellstange (3'), des an der Stellstange (3') angeordneten Messteils (1b), des Läufers (62) und gegebenenfalls der an dem Läufer (62) befestigten Komponenten kompensierbar ist.

2. Rheometer nach Anspruch 1, **dadurch gekennzeichnet, dass** die Gravitationskompensationseinheit (60) zumindest einen Permanentmagneten (63) und ein ferromagnetisches Teil (64) aufweist,
- dass der Permanentmagnet (63) an der Stellstange (3') und/oder dem Läufer (62) des Linearmotors (2') und das ferromagnetische Teil (64) an der Basis (50) des Rheometers angeordnet sind oder
- dass das ferromagnetische Teil (64) an der Stellstange (3') und/oder dem Läufer (62) des Linearmotors (2') und der Permanentmagnet (63) an der Basis (50) des Rheometers angeordnet sind, und
- dass das ferromagnetische Teil (64) und der Permanentmagnet (63) derart zueinander abgestimmt sind, dass zwischen dem ferromagnetischen Teil (64) und dem Permanentmagnet (63) eine Kompensationskraft entgegen der Schwerkraftrichtung auf den Läufer (21) oder die Stellstange (3') wirkt, die der Gewichtskraft der Stellstange (3'), des an der Stellstange (3') angeordneten Messteils (1b) und des Läufers (21) entgegenwirkt.

3. Rheometer nach einem der vorangehenden Ansprüche, **dadurch gekennzeichnet, dass** das ferromagnetische Teil (64) als Rohr ausgebildet ist und der Permanentmagnet (63) zylindrisch oder ringförmig ausgebildet ist, wobei der Permanentmagnet (63) an dem Läufer (62), insbesondere um den Läufer (62) herum, innerhalb des als Rohr ausgebildeten ferromagnetischen Teils (64) angeordnet ist.

4. Rheometer nach Anspruch 1 oder 2, **dadurch gekennzeichnet, dass** das ferromagnetische Teil (64) zylindrisch ausgebildet und an dem Läufer (62), insbesondere um den Läufer (62) herum angeordnet ist, wobei der Permanentmagnet (63) als Rohr ausgebildet ist und als Stator fungiert, wobei das ferromagnetische Teil (64) innerhalb des als Rohr ausgebildeten Permanentmagneten (63) angeordnet ist.

5. Rheometer nach einem der vorangehenden Ansprüche, **dadurch gekennzeichnet, dass** der Linearmotor (2') als Moving-Magnet-Motor oder Moving-Coil-Motor bzw. Tauchspulenmotor ausgebildet ist.

6. Rheometer nach einem der vorangehenden Ansprüche, **dadurch gekennzeichnet, dass** die Gravitationskompensationseinheit (60) in den Linearmotor (2') integriert ist.

7. Rheometer nach einem der Ansprüche 2 bis 6, **dadurch gekennzeichnet, dass** der Linearmotor (2') als Moving-Magnet-Motor ausgebildet ist, dass der Permanentmagnet (63) als Magnet des Linearmotors (2') ausgebildet ist und dass das ferromagnetische Teil (64) in den Stator des Linearmotors (2') integriert ist.

8. Rheometer nach einem der vorangehenden Ansprüche, **dadurch gekennzeichnet, dass** das ferromagnetische Teil (64) aus Eisen oder einer Legierung aus Eisen-Nickel mit geringer magnetischer Hysterese besteht.

9. Rheometer nach einem der vorangehenden Ansprüche, **dadurch gekennzeichnet, dass** der Permanentmagnet (63) durch ferromagnetische Elemente (65) jeweils an den Enden des Permanentmagnetes (63) entlang der Bewegungsrichtung des Linearmotors (2') abgedeckt ist und einen magnetischen Rückschluss ausbildet.

10. Rheometer nach einem der vorangehenden Ansprüche, **dadurch gekennzeichnet, dass** der Permanentmagnet (64) in einer Ausgangsposition im Zentrum des ferromagnetischen Teils (64) angeordnet ist, sodass ein minimaler magnetischer Widerstand in Richtung der Bewegungsrichtung des Linearmotors (2') in der Ausgangsposition wirkt.

## Claims

1. Rheometer for determining rheometric measurement data, wherein the rheometer comprises a rotational rheometer (100) and a linear dynamic mechanical analysis unit (DMA) (200) or a linear dynamic mechanical thermal analysis unit (DMTA) (200), which has at least units for measuring and/or adjusting the normal force (9) and/or the rotational speed of the measuring part (1a) and/or the torque exerted by the measuring shaft (3) or on the measuring shaft (3) and/or the deflection angle of the measuring shaft (3), wherein the rotational rheometer (100) comprises a measuring shaft (3), wherein the measuring shaft (3) is mounted rotatably in a bearing (5), preferably in an air bearing, preferably a predefined height above a base (50) of the rotational rheometer (100), wherein the rotational rheometer (100) is combined with the linear DMA or DMTA analysis unit (200), which has an adjusting rod (3') arranged to be linearly adjustable in a bearing (6), preferably in an air bearing, preferably in a predefined rotational position, and at least units for measuring the tensile force and/or compressive force and/or position and/or feed movement of the adjusting rod (3'), and wherein the measuring shaft (3) and the adjusting rod (3') each support a measuring part (1a, 1b), which form a measuring gap (1), and the preferably viscoelastic sample (19) to be investigated is introduced into the measuring gap (1) between the opposite measuring parts (1a, 1b), wherein the linear DMA or DTMA analysis unit (200) has an in particular magnetically operating, linear motor (2') with a stator (61) and a rotor (62),
**characterised in that**
the DMA or DMTA analysis unit (200) has a magnetically operating gravitational compensation unit (60), with which the weight force of the adjusting rod (3'), the measuring part (1b) arranged on the adjusting rod (3'), the rotor (62) and possibly the components attached to the rotor (62) can be compensated.

2. Rheometer according to claim 1, **characterised in that** the gravitational compensation unit (60) has at least one permanent magnet (63) and one ferromagnetic part (64),
- the permanent magnet (63) is arranged on the adjusting rod (3') and/or the rotor (62) of the linear motor (2') and the ferromagnetic part (64) is arranged on the base (50) of the rheometer, or
- the ferromagnetic part (64) is arranged on the adjusting rod (3') and/or the rotor (62) of the linear motor (2') and the permanent magnet (63) is arranged on the base (50) of the rheometer, and
- the ferromagnetic part (64) and the permanent magnet (63) are matched to one another such that a compensating force between the ferromagnetic part (64) and the permanent magnet (63) acts against the direction of gravitational force on the rotor (21) or the adjusting rod (3'), which counteracts the weight force of the adjusting rod (3'), of the measuring part (1b) arranged on the adjusting rod (3') and the rotor (21).

3. Rheometer according to any of the preceding claims, **characterised in that** the ferromagnetic part (64) is configured in the form of a pipe and the permanent magnet (63) is cylindrical or annular, wherein the permanent magnet (63) is arranged on the rotor (62), in particular around the rotor (62), inside the ferromagnetic part (64) in the form of a pipe.

4. Rheometer according to claim 1 or 2, **characterised in that** the ferromagnetic part (64) is configured to be cylindrical and is arranged on the rotor (62), in particular around the rotor (62), wherein the permanent magnet (63) is in the form of a pipe and functions as a stator, wherein the ferromagnetic part (64) is arranged inside the permanent magnet (63) in the form of a pipe.

5. Rheometer according to any of the preceding claims, **characterised in that** the linear motor (2') is in the form of a moving magnet motor or moving coil motor or immersion coil motor.

6. Rheometer according to any of the preceding claims, **characterised in that** the gravitational compensation unit (60) is integrated into the linear motor (2').

7. Rheometer according to any of claims 2 to 6, **characterised in that** the linear motor (2') is in the form of a moving magnet motor, the permanent magnet (63) is a magnet of the linear motor (2') and the ferromagnetic part (64) is integrated into the stator of the linear motor (2').

8. Rheometer according to any of the preceding claims, **characterised in that** the ferromagnetic part (64) is made of iron or an iron-nickel alloy with low magnetic hysteresis.

9. Rheometer according to any of the preceding claims, **characterised in that** the permanent magnet (63) is covered by ferromagnetic elements (65) on respective ends of the permanent magnet (63) along the direction of movement of the linear motor (2') and forms a magnetic yoke.

10. Rheometer according to any of the preceding claims, **characterised in that** the permanent magnet (64) is arranged in a starting position in the centre of the ferromagnetic part (64), so that a minimal magnetic resistance acts in the direction of the direction of movement of the linear motor (2') in the starting position.

## Revendications

1. Rhéomètre permettant de déterminer des données de mesure rhéométriques, dans lequel le rhéomètre comprend un rhéomètre rotatif (100) et une unité d'analyse mécanique dynamique linéaire (DMA) (200) ou une unité d'analyse thermique mécanique dynamique linéaire (DMTA) (200) présentant au moins des unités permettant de mesurer et/ou ajuster la force normale (9) et/ou la vitesse de rotation de la pièce de mesure (1a) et/ou le couple exercé par l'arbre de mesure (3) ou sur l'arbre de mesure (3) et/ou l'angle de déviation de l'arbre de mesure (3), dans lequel le rhéomètre rotatif (100) comprend un arbre de mesure (3), dans lequel l'arbre de mesure (3) est monté rotatif dans un palier (5), de préférence dans un palier pneumatique, de préférence à une hauteur prédéfinie au-dessus d'une base (50) du rhéomètre rotatif (100), dans lequel le rhéomètre rotatif (100) est combiné à l'unité d'analyse linéaire DMA ou DMTA (200) qui présente une tige de réglage (3') pouvant être déplacée de manière linéaire en étant guidée dans un palier (6), de préférence dans un palier pneumatique, de préférence dans une position de rotation prédéfinie, et au moins des unités permettant de mesurer la force de traction et/ou de compression et/ou la position et/ou le mouvement d'avancée de la tige de réglage (3'), et dans lequel l'arbre de mesure (3) et la tige de réglage (3') portent respectivement une pièce de mesure (1a, 1b) formant une fente de mesure (1), et l'échantillon (19), de préférence viscoélastique, à examiner est introduit dans la fente de mesure (1) entre les pièces de mesure (1a, 1b) se faisant face, dans lequel l'unité d'analyse linéaire DMA ou DMTA (200) présente un moteur linéaire (2'), en particulier un moteur linéaire à action magnétique, avec un stator (61) et un rotor (62), **caractérisé en ce que**
l'unité d'analyse DMA ou DMTA (200) présente une unité de compensation de gravité à action magnétique (60) avec laquelle le poids de la tige de réglage (3'), de la pièce de mesure (1b) agencée au niveau de la tige de réglage (3'), du rotor (62) et éventuellement des composants fixés au rotor (62) peut être compensé.

2. Rhéomètre selon la revendication 1, **caractérisé en ce que** l'unité de compensation de gravité (60) présente au moins un aimant permanent (63) et une pièce ferromagnétique (64),
- l'aimant permanent (63) est agencé au niveau de la tige de réglage (3') et/ou le rotor (62) du moteur linéaire (2') et la pièce ferromagnétique (64) sont agencés au niveau de la base (50) du rhéomètre, ou
- la pièce ferromagnétique (64) est agencée au niveau de la tige de réglage (3') et/ou le rotor (62) du moteur linéaire (2') et l'aimant permanent (63) sont agencés au niveau de la base (50) du rhéomètre, et
- la pièce ferromagnétique (64) et l'aimant permanent (63) sont adaptés l'un à l'autre de telle manière qu'une force de compensation, s'opposant au poids de la tige de réglage (3'), de la pièce de mesure (1b) agencée au niveau de la tige de réglage (3') et du rotor (21), agit sur le rotor (21) ou la tige de réglage (3') à l'encontre de la direction de gravité entre la pièce ferromagnétique (64) et l'aimant permanent (63).

3. Rhéomètre selon l'une quelconque des revendications précédentes, **caractérisé en ce que** la pièce ferromagnétique (64) est réalisée sous la forme d'un tube et l'aimant permanent (63) est réalisé de manière cylindrique ou annulaire, dans lequel l'aimant permanent (63) est agencé au niveau du rotor (62), en particulier autour du rotor (62), à l'intérieur de la pièce ferromagnétique (64) réalisée sous la forme d'un tube.

4. Rhéomètre selon la revendication 1 ou 2, **caractérisé en ce que** la pièce ferromagnétique (64) est réalisée de manière cylindrique et est agencée au niveau du rotor (62), en particulier autour du rotor (62), dans lequel l'aimant permanent (63) est réalisé sous la forme d'un tube et fonctionne comme un stator, dans lequel la pièce ferromagnétique (64) est agencée à l'intérieur de l'aimant permanent (63) réalisé sous la forme d'un tube.

5. Rhéomètre selon l'une quelconque des revendications précédentes, **caractérisé en ce que** le moteur linéaire (2') est réalisé sous la forme d'un moteur à aimant mobile ou d'un moteur à bobine mobile ou d'un moteur à bobines mobiles.

6. Rhéomètre selon l'une quelconque des revendications précédentes, **caractérisé en ce que** l'unité de compensation de gravité (60) est intégrée dans le moteur linéaire (2').

7. Rhéomètre selon l'une quelconque des revendications 2 à 6, **caractérisé en ce que** le moteur linéaire (2') est réalisé sous la forme d'un moteur à aimant mobile, **en ce que** l'aimant permanent (63) est réalisé sous la forme d'un aimant du moteur linéaire (2') et **en ce que** la pièce ferromagnétique est intégrée dans le stator du moteur linéaire (2').

8. Rhéomètre selon l'une quelconque des revendications précédentes, **caractérisé en ce que** la pièce ferromagnétique (64) est constituée de fer ou d'un alliage de fer et de nickel présentant une faible hystérésis magnétique.

9. Rhéomètre selon l'une quelconque des revendications précédentes, **caractérisé en ce que** l'aimant permanent (63) est recouvert d'éléments ferromagnétiques (65) le long de la direction de déplacement du moteur linéaire (2') au niveau des extrémités respectives de l'aimant permanent (63) et réalise un reflux magnétique.

10. Rhéomètre selon l'une quelconque des revendications précédentes, **caractérisé en ce que** l'aimant permanent (64) est agencé dans une position initiale au centre de la pièce ferromagnétique (64), de sorte qu'une résistance magnétique minimale agit dans le sens de la direction de déplacement du moteur linéaire (2') dans la position initiale.
